# EUROPEAN PATENT SPECIFICATION

(11) **EP 2 126 409 B1**
(45) Date of publication and mention of the grant of the patent: **07.09.2011**
(21) Application number: 08734604.5
(22) Date of filing: 13.03.2008
(51) Int. Cl.: F16H 3/00

(54) **A DUAL CLUTCH TRANSMISSION FOR MOTOR VEHICLES, PARTICULARLY FOR AGRICULTURAL TRACTORS**
DOPPELKUPPLUNGSGETRIEBE FÜR KRAFTFAHRZEUGE, IM BESONDEREN FÜR LANDWIRTSCHAFTLICHE TRAKTOREN
TRANSMISSION A DOUBLE EMBRAYAGE POUR VEHICULES A MOTEUR, EN PARTICULIER POUR TRACTEURS AGRICOLES

(30) Priority: 26.03.2007 IT PD20070112
(43) Date of publication of application: 02.12.2009
(73) Proprietor: CARRARO S.p.A., 35011 Campodarsego (Padova) (IT)
(72) Inventor: MALVESTIO, Luciano, 35010 Villanova di Camposampiero (PD) (IT); MANGIARACINA, Enrico, 35127 Padova (IT); PIROTTA, Santino, 20069 Vaprio D'Adda (MI) (IT)
(74) Representative: Cantaluppi, Stefano
(86) International application number: PCT/EP2008/001987
(87) International publication number: WO 2008/116562

(56) References cited:
- EP-A- 0 190 655
- WO-A-85/01335
- US-A- 4 777 837
- US-A- 5 603 242

## Description

The present invention relates to a transmission of the Dual Clutch type for motor vehicles including, in particular, agricultural tractors.

The transmission is of a type including the features mentioned in the preamble of the main claim and is of a type known in the field by the abbreviation DCT (Dual Clutch Transmission).

A transmission of this type is described in W02005/021999.

Such transmissions provide for the switching of a plurality of gear ratios without interrupting the torque transmitted. Generally they are formed of two input driving shafts that can be selectively connected by respective clutches to the main drive input shaft. The two input driving shafts are often arranged coaxially one inside the other; the outer shaft is therefore hollow and the two actuation clutches are placed at one end of the transmission, at the main drive input shaft.

The two shafts are therefore connected to a first and to a second partial transmission, the first of which actuates, for example, the odd-numbered gear phases (e.g. 1, 3, 5, 7) while the second actuates the even-numbered gear phases (e.g. 2, 4, 6, 8). There is also provided an actuating shaft which is coupled, as desired, via a first coupling to the first input driving shaft or via a second coupling to the second input driving shaft. At the moment of shifting from one gear to the next higher or lower gear, one of these couplings is opened and the other is simultaneously closed so that the engine torque can be transferred, without interrupting the tractive effort, from one partial transmission to the other.

The disadvantages of these solutions with respect to other automatic transmission designs include the increased size lengthwise and the constructional complexity in producing high-speed rotating hollow shafts. To curb the axial dimensions of the transmission, a particular arrangement of the actuating shaft and of the associated couplings has been studied, as described in WO2006/084555. Although this solution provides for reducing the number of axes of rotation of the various components of the transmission, it is still relatively bulky and of rather complex construction:

Another transmission of this type is disclosed in US 4,777,837. This transmission is also bulky and requires at least three separate and spaced apart shafts to operate.

An object of the invention is to produce a transmission of the DCT type characterized by being very compact and of simple construction. This aim is achieved by a transmission produced in accordance with the claims that follow.

The features and advantages of the invention will become clear from the following detailed description of one of its preferred example embodiments illustrated, by way of indication and in a non-limiting manner, with reference to the appended drawings in which:
- Figure 1 is a schematic view of the transmission according to the invention;
- Figures 2 to 9 are views of the transmission of Figure 1 in the various gear phases.

In the drawings, the label 1 indicates in an overall sense a dual clutch transmission for motor vehicles, particularly but not exclusively studied for applications relating to agricultural tractors. The transmission 1 comprises an input shaft 2 and an output shaft 3 that can be connected one to the other through preselected pairs of toothed wheels indicated by the labels 4a,b, 5a,b, 6a,b, 7a,b, 8a,b, 9a,b, in constant reciprocal meshing. These wheel pairs are indicated jointly by the common numerical reference, without the alphabetical index (e.g. the wheels 4a,b are indicated jointly by 4).

The input shaft 2 is securely connected in rotation to both the respective driving parts 10, 11 of a first and a second clutch 12, 13, the driven parts 14, 15 of which are instead connected to a respective first and second input driving shaft 16, 17 of a respective first and second partial transmission 18, 19.

The partial transmissions 18, 19 comprise respectively the pairs 4, 5 and 6, 7 which in turn are intended to actuate the even-numbered gear phases (e.g. 2, 4, 6, 8) and the odd-numbered gear phases (e.g. 1, 3, 5, 7) respectively.

The partial transmissions 18, 19 comprise a respective first and second output driving shaft 20, 21 and a respective first and second clutch or selector 22, 23 to connect the respective output driving shaft to a preselected wheel pair 4, 5 or 6, 7 of the respective partial transmission.

A third clutch 24 is provided to alternately connect one or the other of the output driving shafts 20, 21 to the main output shaft 3 via the wheel pair 8 or 9 respectively. The wheels 8b, 9b of these pairs can in turn be alternately secured in rotation to the output shaft 3 via respective clutches or selectors 25, 26.

It will be observed that the first and second clutches 12, 13 are arranged in a position contained between the input driving shafts 16, 17, thereby making the transmission according to the invention advantageously compact in the axial direction. In addition, the drive lines are formed along only two axes, thereby making the transmission 1 compact in the transverse direction too.

This is achieved by virtue of the fact that the input shaft 2 is extended coaxially inside the first input driving shaft 16, which is produced in the form of a hollow shaft.

Similarly the first output driving shaft 20 is extended coaxially inside the second output driving shaft 21, which is also produced in the form of a hollow shaft.

Furthermore, the transmission according to the present invention can comprise a power take-off shaft 28 connected to a power take-off train unit such as the driving parts of the clutches 12, 13 and can have this power take-off shaft extended coaxially inside the second input driving shaft 17 which is produced in the form of a hollow shaft. In the diagrams describing the operation of the transmission, the power take-off shaft 28 has been omitted for the sake of clarity of representation. There is lastly provided, although not represented, a reverser device, which is known per se, for driving the vehicle in reverse.

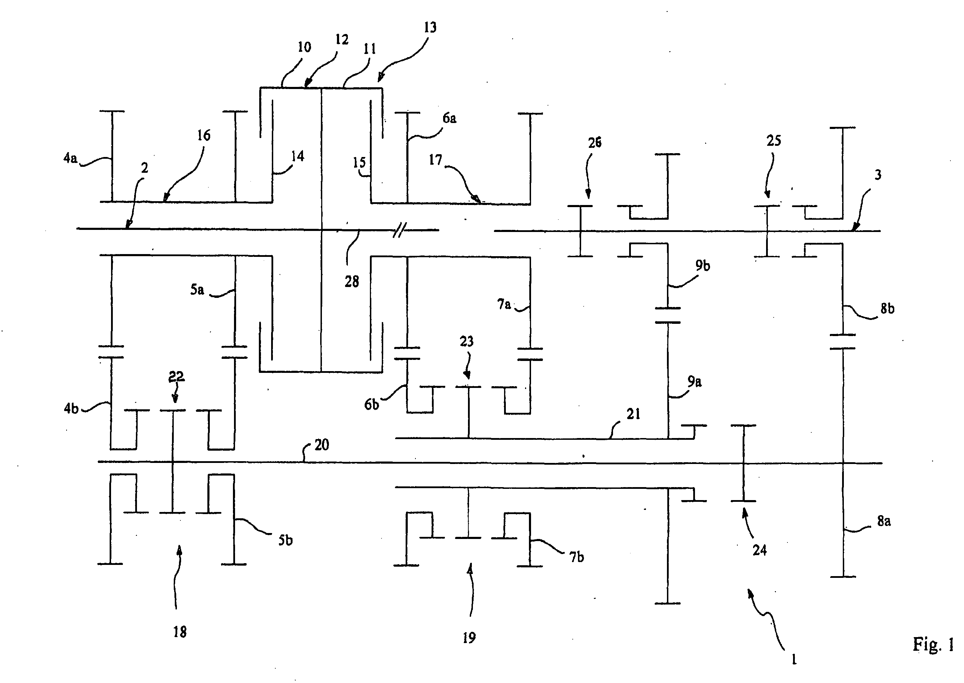

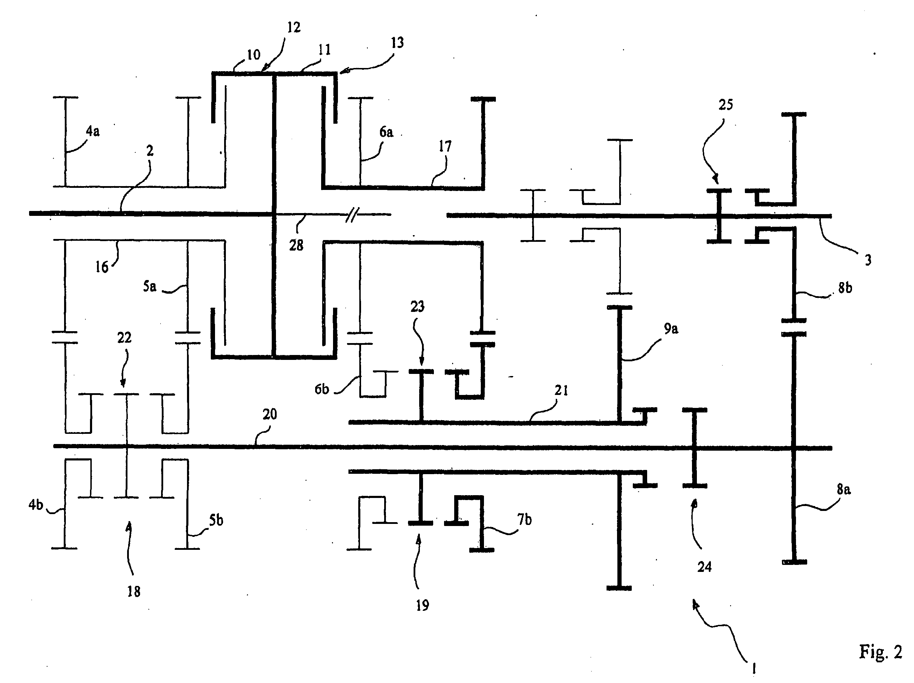

With reference to Figures 2 to 9, the transmission according to invention operates as follows:
In first gear (Figure 1), the clutch 13 is engaged while the clutch 14 is disengaged so that the input drive through the shaft 2 flows through the second partial transmission 19.

The couplings D, F and G of the clutches 23, 24 and 25 are closed so that the drive takes place through the wheel pair 7a,b and the output driving shaft 21, via the clutch 23, between the shaft 21 and the shaft 20 via the clutch 24 and between the shaft 20 and the shaft 3 through the wheel pair 8, the clutch 25 and the shaft 3.

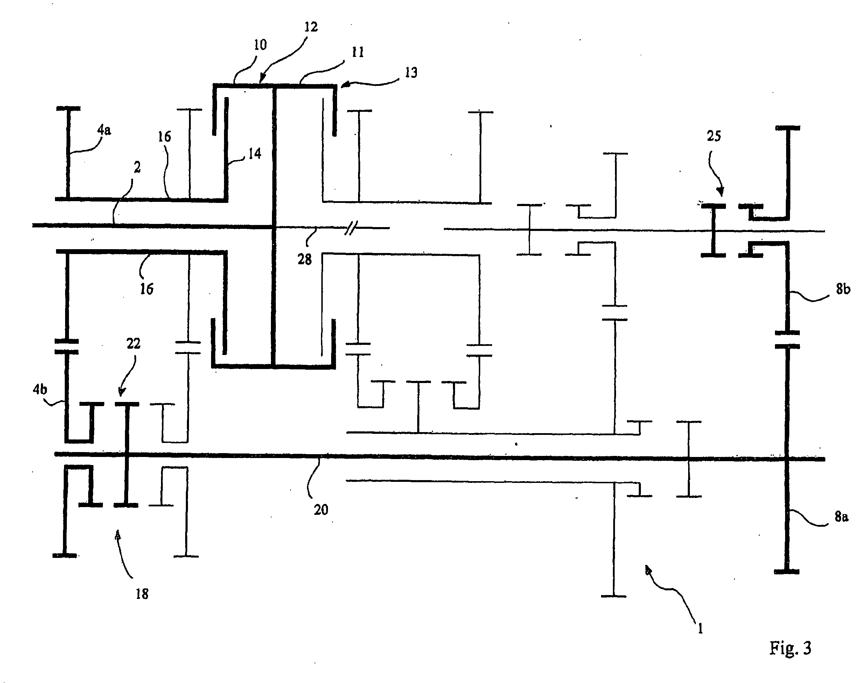

To shift from the first to the second gear (Figure 3), the clutch 22 of the first partial transmission 18 is preselected in order to close the coupling B between the first input driving shaft 16 and the first output driving shaft 20. The first clutch 12 is open and the coupling F between the output shaft 3 and the wheel pair 8 stays closed. When the second clutch 13 is disengaged and the first clutch 12 is simultaneously engaged, the gear-ratio shift takes place in a completely gradual manner and without any interruption to the torque transmitted. The flow is as represented in the drawing.

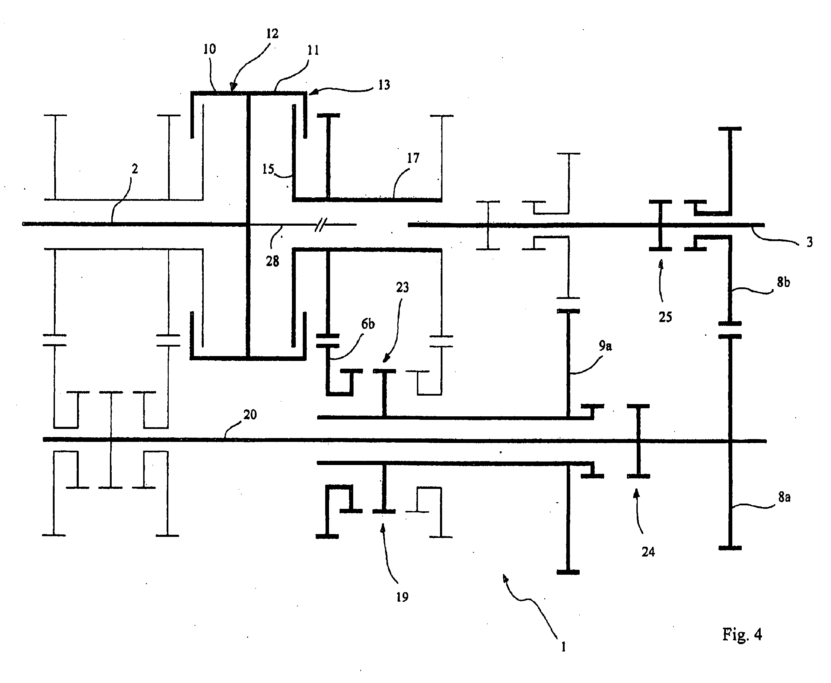

To shift from the second to the third gear (Figure 4), the clutch 23 of the second partial transmission 19 is preselected in order to close the coupling C between the second input driving shaft 17 and the second output driving shaft 21, and the clutch 24 is preselected in order to close the coupling G already seen previously. The second clutch 13 is open and the coupling F between the output shaft 3 and the wheel pair 8 stays closed. When the first clutch 12 is disengaged and the second clutch 13 is simultaneously engaged, the gear-ratio shift takes place in a completely gradual manner and without any interruption to the torque transmitted. The flow is as represented in the drawing.

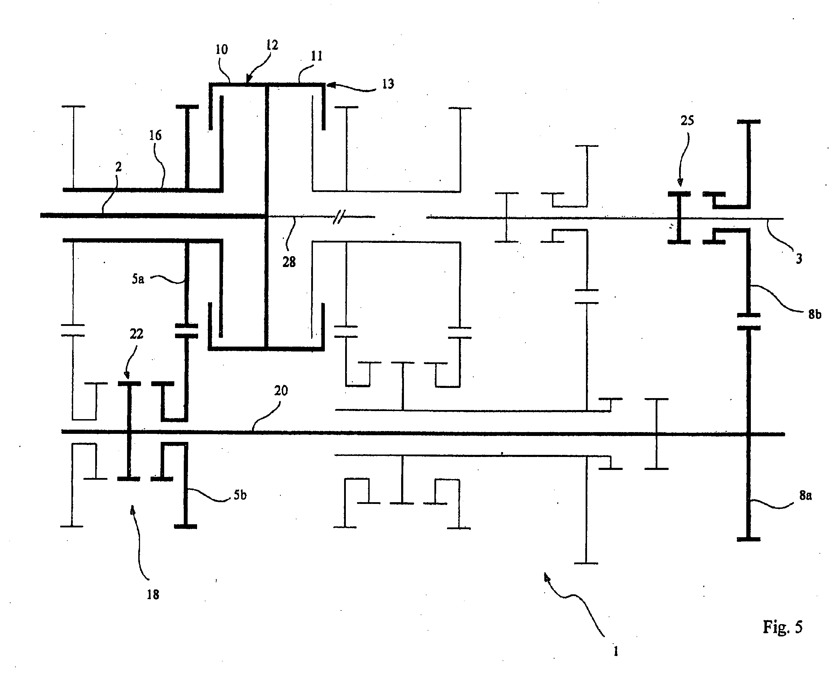

To shift from the third to the fourth gear (Figure 5), the clutch 22 of the first partial transmission 18 is preselected in order to close the coupling A between the first input driving shaft 16 and the first output driving shaft 20.

The first clutch 12 is open and the coupling F between the output shaft 3 and the wheel pair 8 stays closed. When the second clutch 13 is disengaged and the first clutch 12 is simultaneously engaged, the desired gear-ratio shift is achieved. The flow is as represented in the drawing.

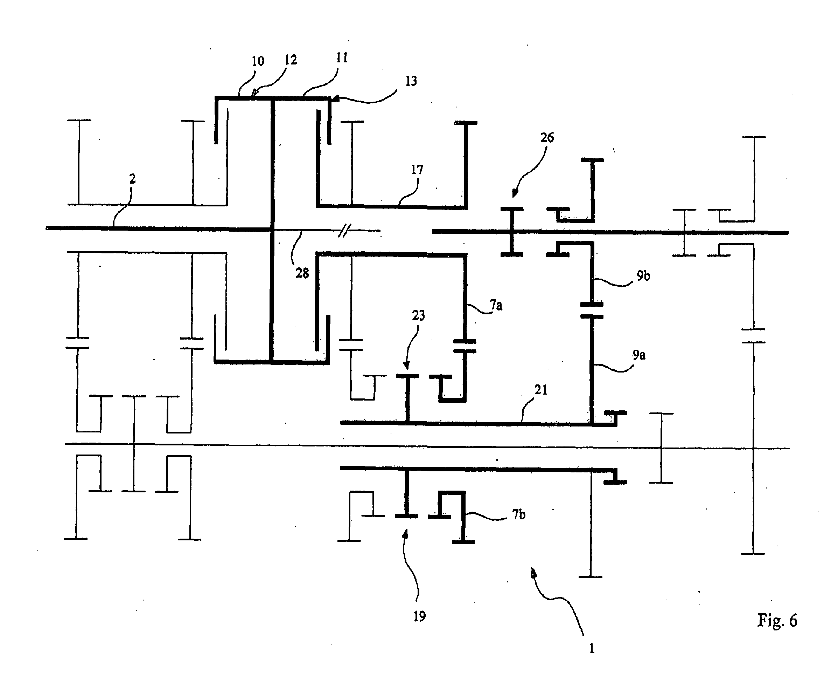

To shift from the fourth to the fifth gear (Figure 6), the clutch 23 of the second partial transmission 19 is preselected in order to close the coupling D between the second input driving shaft 17 and the second output driving shaft 21, and the clutch 26 is preselected in order to close the coupling E between the output shaft 3 and the wheel pair 9. When the first clutch 12 is disengaged and the second clutch is simultaneously engaged, the desired gear-ratio shift is achieved. The flow is as represented in the drawing.

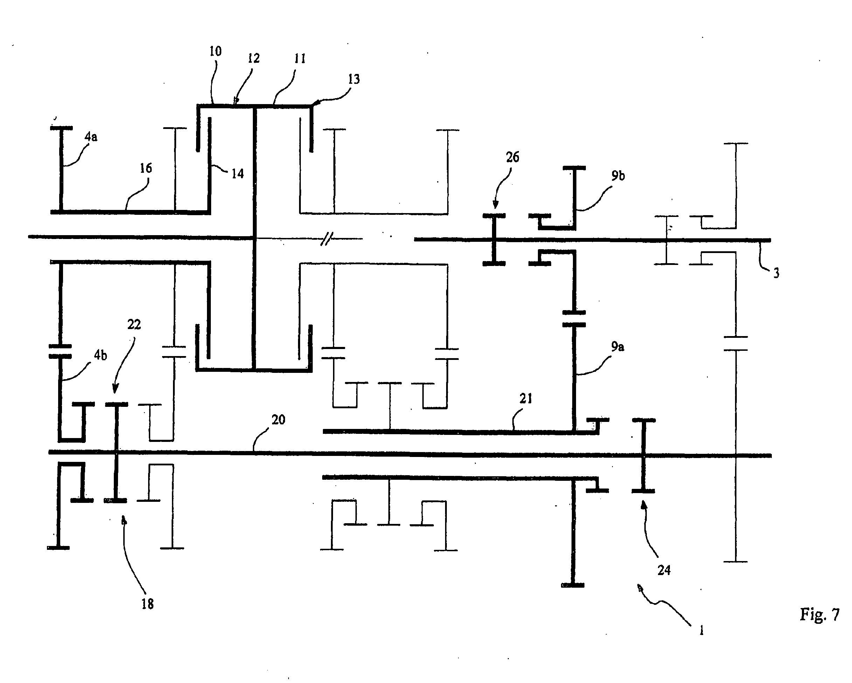

To shift from the fifth to the sixth gear (Figure 7), the clutch 22 of the first partial transmission 18 is preselected in order to close the coupling B between the first input driving shaft 16 and the first output driving shaft 20. The first clutch 12 is open and the coupling G between the output driving shaft 21 and the wheel pair 9 and the clutch 26 between the latter and the output shaft 3 stay closed. When the second clutch 13 is disengaged and the first clutch 12 is simultaneously engaged, the desired gear-ratio shift is achieved. The flow is as represented in the drawing.

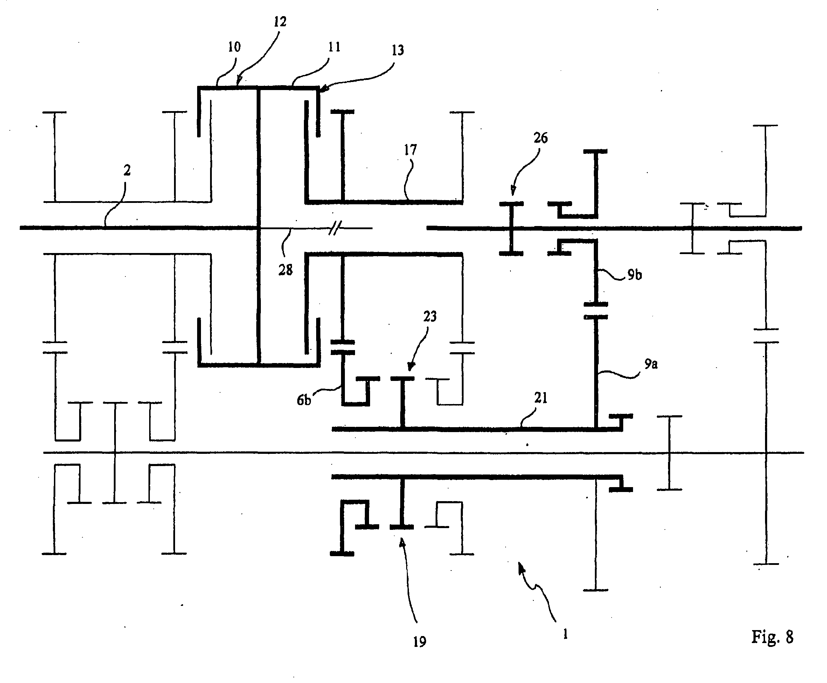

To shift from the sixth to the seventh gear (Figure 8), the clutch 23 of the second partial transmission 19 is preselected in order to close the coupling C between the second input driving shaft 17 and the second output driving shaft 21. The clutches 24 and 25 are open while the clutch 26 of the coupling E, already seen previously, is closed and the second clutch 13 is open. When the first clutch 12 is disengaged and the second clutch 13 is simultaneously engaged, the desired gear-ratio shift is achieved. The flow is as represented in the drawing.

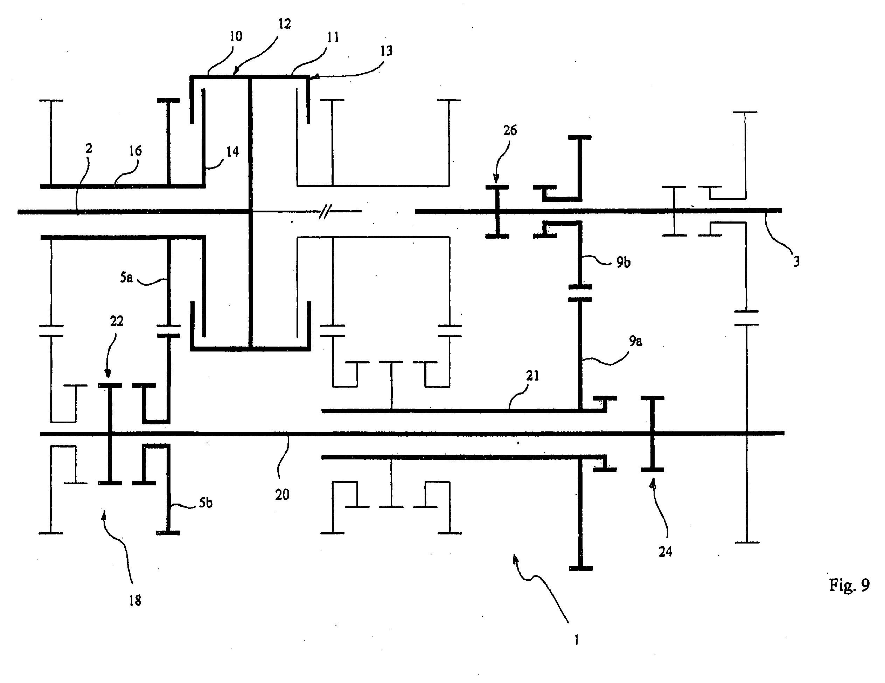

To shift from the seventh to the eighth gear (Figure 9), the clutch 22 of the first partial transmission 18 is preselected in order to close the coupling A between the first input driving shaft 16 and the first output driving shaft 20. The first clutch 12 is open and the coupling G between the output shaft 3 and the wheel pair 9 stays closed. When the second clutch 13 is disengaged and the first clutch 12 is simultaneously engaged, the desired gear-ratio shift is achieved. The flow is as represented in the drawing.

The invention thus solves the stated problem gaining a number of advantages over the prior art technical solutions.

Among them, the following advantages are highlighted:
- the positioning of the input driving shafts on opposite sides with respect to the actuating clutches provides for reducing the size in the axial direction by making full use of the space occupied by the clutches;
- the solution invented never has more than two coaxial shafts. This provides for smaller radial sizes, lower inertias, greater rigidities and easier lubrication.

## Claims

1. A dual clutch transmission (1) for motor vehicles, particularly for agricultural tractors, comprising:
- an input shaft (2) and an output shaft (3) that can be connected to one another via preselected pairs of reciprocally meshed toothed wheels (4a,4b,5a,5b,6a,6b,7a,7b,8a,8b,9a,9b);
- a first (12) and a second clutch (13), the respective driving parts (10,11) of which are connected in torsional coupling to the input shaft (2) and the respective driven parts (14,15) are connected to a respective first and second input driving shaft (16,17) of a respective first and second partial transmission (18,19),
- the partial transmissions (18,19) being respectively arranged to actuate the wheel pairs (4,5,6,7) corresponding to the odd-numbered gear phases (e.g. 1, 3, 5, 7) and the even-numbered gear phases (e.g. 2, 4, 6, 8) respectively,
- the partial transmissions (18,19) having a respective first and second output driving shaft (20,21) and a respective first and second clutch (22,23) to connect the respective output driving shaft to a preselected pair of meshing wheels (4,5,6,7) of the respective partial transmission,
- further clutch means (24,25,26) to alternately connect one or the other of the output driving shafts (20,21) to the main output shaft (3),
- the first and second clutches (12,13) of the input driving shafts being arranged in a position contained between the input driving shafts (16,17)
- the further clutch means (24,25,26) comprise a third clutch (24) to selectively secure together in rotation the first and the second output driving shafts (20,21)
**characterized in that** the first output driving shaft (20) is extended coaxially inside the second output driving shaft (21), which is in the form of a hollow shaft.

2. A transmission according to Claim 1, in which the input shaft (2) is extended coaxially inside the first input driving shaft (16) which is produced in the form of a hollow shaft.

3. A transmission according to either Claim 1 or Claim 2, including a power take-off shaft (28) connected to a power take-off train unit and in which the power take-off shaft is extended coaxially inside the second input driving shaft (17) which is produced in the form of a hollow shaft.

4. A transmission according, to one or more of the preceding claims in which the further clutch means (24,25,26) comprise a fourth (25) and a fifth (26) clutch to connect in rotation via respective wheel pairs the output shaft to one or to the other of the output driving shafts.

## Patentansprüche

1. Doppelkupplungsgetriebe (1) für Kraftfahrzeuge, insbesondere für landwirtschaftliche Traktoren, umfassend:
- eine Eingangswelle (2) und eine Ausgangswelle (3), die über vorgewählte Zahnradpaare (4a, 4b, 5a, 5b, 6a, 6b, 7a, 7b, 8a, 8b, 9a, 9b), die wechselseitig in Eingriff stehen, miteinander verbunden werden können,
- eine erste (12) und eine zweite (13) Kupplung, deren zugehörige Antriebsteile (10, 11) in Torsionskopplung mit der Eingangswelle (2) verbunden sind und zugehörige Abtriebsteile (14, 15) mit einer zugehörigen ersten und zweiten Eingangsantriebswelle (16, 17) eines zugehörigen ersten und zweiten Teilgetriebes (18, 19) verbunden sind,
- wobei die Teilgetriebe (18, 19) jeweils so angeordnet sind, dass sie die Räderpaare (4, 5, 6, 7) betätigen, die den ungeradzahligen Getriebephasen (z. B. 1, 3, 5, 7) bzw. den geradzahligen Getriebephasen (z. B. 2, 4, 6, 8) zugeordnet sind,
- wobei die Teilgetriebe (18, 19) eine zugehörige erste und zweite Ausgangsantriebswelle (20, 21) und eine zugehörige erste und zweite Kupplung (22, 23) zum Verbinden der zugehörigen Ausgangsantriebswelle mit einem vorgewählten Paar Zahnräder (4, 5, 6, 7) des zugehörigen Teilgetriebes aufweisen,
- weitere Kupplungsmittel (24, 25, 26) zum abwechselnden Verbinden der einen oder der anderen der Ausgangsantriebswellen (20, 21) mit der Hauptausgangswelle (3),
- wobei die erste und zweite Kupplung (12, 13) der Eingangsantriebswellen in einer Position angeordnet sind, die zwischen den Eingangsantriebswellen (16, 17) gelegen ist,
- wobei die weiteren Kupplungsmittel (24, 25, 26) eine dritte Kupplung (24) umfassen, die die erste und zweite Ausgangsantriebswelle (20, 21) selektiv drehbar aneinander befestigt,
**dadurch gekennzeichnet, dass** die erste Ausgangsantriebswelle (20) sich koaxial in der zweiten Ausgangsantriebswelle (21) erstreckt, die in Form einer Hohlwelle ausgebildet ist.

2. Getriebe nach Anspruch 1, bei dem die Eingangswelle (2) sich koaxial in der ersten Eingangsantriebswelle (16) erstreckt, die in Form einer Hohlwelle ausgebildet ist.

3. Getriebe nach Anspruch 1 oder Anspruch 2, umfassend eine Zapfwelle (28), die mit einer Abtriebsstrangeinheit verbunden ist und in der die Zapfwelle sich koaxial in der zweiten Eingangsantriebswelle (17) erstreckt, die in Form einer Hohlwelle ausgebildet ist.

4. Getriebe nach einem oder mehreren der vorhergehenden Ansprüche, bei dem die weiteren Kupplungsmittel (24, 25, 26) eine vierte (25) und eine fünfte (26) Kupplung umfassen, die über zugehörige Radpaare die Ausgangswelle mit der einen oder der anderen der Ausgangsantriebswellen in Drehverbindung bringen.

## Revendications

1. Transmission à double embrayage (1) pour véhicules à moteur, en particulier pour tracteurs agricoles, comprenant :
- un arbre d'entrée (2) et un arbre de sortie (3) qui peuvent être connectés l'un à l'autre via des paires présélectionnées d'engrenages en engrènement réciproque (4a, 4b, 5a, 5b, 6a, 6b, 7a, 7b, 8a, 8b, 9a, 9b) ;
- un premier embrayage (12) et un second embrayage (13) ; les parties d'entraînement respectives (10, 11) de ceux-ci étant connectées en couplage en torsion à l'arbre d'entrée (2), et les parties entraînées respectives (14, 15) étant connectées à un premier et à un second arbre d'entraînement (16, 17) respectifs d'une première et d'une seconde transmission partielle (18, 19) respectives ;
- les transmissions partielles (18, 19) étant respectivement agencées pour actionner les paires d'engrenages (4, 5, 6, 7) correspondant aux phases de rapports de numéro impair (par exemple 1, 3, 5, 7) et aux phases de rapports de numéro pair (par exemple 2, 4, 6, 8) respectivement,
- les transmissions partielles (18, 19) ayant un premier et un second arbre d'entraînement de sortie (20, 21) respectif et un premier et un second embrayage respectif (22, 23) pour connecter l'arbre d'entraînement de sortie respectif à une paire présélectionnée d'engrenages en engrènement (4, 5, 6, 7) de la transmission partielle respective,
- d'autres moyens d'embrayage (24, 25, 26) pour connecter alternativement l'un ou l'autre des arbres d'entraînement de sortie (20, 21) avec l'arbre de sortie principal (3) ;
- le premier et le second embrayage (12, 13) des arbres d'entraînement d'entrée étant agencés dans une position contenue entre les arbres d'entraînement d'entrée (16, 17) ;
- les autres moyens d'embrayage (24, 25, 26) comprennent un troisième embrayage (24) pour bloquer sélectivement ensemble en rotation le premier et le second arbre d'entraînement de sortie (20, 21) ;
**caractérisée en ce que** le premier arbre d'entraînement de sortie (20) s'étend coaxialement à l'intérieur du second arbre d'entraînement de sortie (21), lequel a la forme d'un arbre creux.

2. Transmission selon la revendication 1, dans laquelle l'arbre d'entrée (2) s'étend coaxialement à l'intérieur du premier arbre d'entraînement d'entrée (16), lequel est produit sous la forme d'un arbre creux.

3. Transmission selon l'une ou l'autre des revendications 1 ou 2, incluant un arbre de prise de puissance (28) connecté à une unité à train de prise de puissance, et dans laquelle l'arbre de prise de puissance s'étend coaxialement à l'intérieur du second arbre d'entraînement d'entrée (17) qui est produit sous la forme d'un arbre creux.

4. Transmission selon l'une ou plusieurs des revendications précédentes, dans laquelle les autres moyens d'embrayage (24, 25, 26) comprennent un quatrième embrayage (25) et un cinquième embrayage (26) destinés à connecter en rotation via des paires d'engrenages respectives l'arbre de sortie à l'un ou à l'autre des arbres d'entraînement de sortie.
